(19) Europäisches Patentamt
European Patent Office
Office européen des brevets

(11) **EP 4 383 133 A1**

(12) **EUROPEAN PATENT APPLICATION**

(43) Date of publication:
**12.06.2024 Bulletin 2024/24**

(21) Application number: **22290066.4**

(22) Date of filing: **07.12.2022**

(51) International Patent Classification (IPC):
**G06N 3/0455** (2023.01)     **G06N 3/0895** (2023.01)
**G06T 7/00** (2017.01)

(52) Cooperative Patent Classification (CPC):
**G06N 3/0455; G06N 3/0895; G06T 7/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Google LLC
Mountain View, CA 94043 (US)**

(72) Inventors:
• **ARNAB, Anurag
  Mountain View, 94043 (US)**
• **FONSECA, Eduardo
  Mountain View, 94043 (US)**

• **LUCIC, Mario
  Mountain View, 94043 (US)**
• **SCHMID, Cordelia Luise
  Mountain View, 94043 (US)**
• **GEORGESCU, Mariana-Iuliana
  Mountain View, 94043 (US)**

(74) Representative: **Derry, Paul Stefan et al
Venner Shipley LLP
200 Aldersgate
London EC1A 4HD (GB)**

Remarks:
Claims 16-20 are deemed to be abandoned due to
non-payment of the claims fees (Rule 45(3) EPC).

(54) **MULTIMODAL MASKED AUTOENCODER**

(57)     A method for training a machine learning model, comprises: receiving a plurality of training examples for training a machine learning model, wherein each of the plurality of training examples includes a set of unmasked tokens for a first modality and a set of unmasked tokens for a second modality; for each training example of the plurality of training examples: processing, by an encoder of the machine learning model, the set of unmasked tokens for the first modality of the training example and the set of unmasked tokens for the second modality of the training example to generate a set of embedded tokens for the first modality; processing, by a decoder of the machine learning model, at least the set of embedded tokens for the first modality to reconstruct a set of masked tokens for the first modality; and determining a loss based on the reconstructed set of masked tokens for the first modality and a set of masked tokens for the first modality according to an objective function; optimizing the objective function to decrease the losses for the plurality of training examples; and updating model parameters of the machine learning model based on the optimizing of the objective function.

EP 4 383 133 A1

**Description**

BACKGROUND

This specification relates to systems and methods for training a multimodal masked autoencoder.
Machine learning is a type of artificial intelligence that aims to teach computers how to learn and act without necessarily being explicitly programmed. More specifically, machine learning is an approach to data analysis that involves building and adapting models, which allow computer-executable programs to "learn" through experience. Machine learning involves the design of algorithms that adapt their models to improve their ability to make predictions. This is done by training a machine learning model using historical data (training data) for which the outcome (label) is known, called supervised learning. In some cases, a machine learning model is compatible with unsupervised learning or self-supervised learning, where there are few or no labeled training examples for the training process. The computer may identify rules or relationships during the training period and learn the learning parameters of the machine learning model. Then, using new inputs, the machine learning model can generate a prediction based on the identified rules or relationships.

DETAILED DESCRIPTION

This specification generally describes systems and methods for training a multimodal masked autoencoder. The multimodal can include multiple modalities, such as a first modality for audio data and a second modality for video data. The multimodal masked autoencoder is configured to reconstruct masked tokens for one or more modalities by processing unmasked tokens for the one or more modalities. The multimodal masked autoencoder includes an encoder and a decoder. The encoder and the decoder can have a few different structures to process multimodal inputs.
In one aspect, a method for training a machine learning model, includes: receiving multiple training examples for training a machine learning model, wherein each of the multiple training examples includes a set of unmasked tokens for a first modality and a set of unmasked tokens for a second modality; for each training example of the multiple training examples: processing, by an encoder of the machine learning model, the set of unmasked tokens for the first modality of the training example and the set of unmasked tokens for the second modality of the training example to generate a set of embedded tokens for the first modality; processing, by a decoder of the machine learning model, at least the set of embedded tokens for the first modality to reconstruct a set of masked tokens for the first modality; and determining a loss based on the reconstructed set of masked tokens for the first modality and a set of masked tokens for the first modality according to an objective function; optimizing the objective function to decrease the losses for the multiple training examples; and updating model parameters of the machine learning model based on the optimizing of the objective function. Other aspects include systems and software storing instructions that cause systems to perform the operations of the above-described method.
In some implementations, the techniques to generate the multiple training examples include: receiving multiple input examples, wherein each of the multiple input examples includes a first portion for a first modality and a second portion for a second modality; and generating a training example for each of the multiple input examples. The process for generating the training example can include masking the first portion of the first modality for the input example to generate the set of masked tokens for the first modality and the set of unmasked tokens for the first modality, and masking the second portion of the second modality for the input example to generate a set of masked tokens for the second modality and a set of unmasked tokens for the second modality.
To reconstruct the set of masked tokens for the first modality, the system can process, by the decoder of the machine learning model, (i) the set of embedded tokens for the first modality and (ii) a set of unmasked tokens for the second modality to reconstruct the set of masked tokens for the first modality. Alternatively, the system can process, by the decoder of the machine learning model, (i) the set of embedded tokens for the first modality and (ii) a set of embedded masked tokens for the second modality generated by the encoder for the training example to reconstruct the set of masked tokens for the first modality.
In some cases, the described techniques are configured to process two modalities. The first modality can be a video modality, and the second modality can be an audio modality. Alternatively, the first modality can be an audio modality, and the second modality can be a video modality.
The input examples can each include a video input and a corresponding audio input, for example, one input example can be a video clip with a corresponding audio track. The described techniques can process a sequence of images for a sequence of time steps, and a corresponding audio spectrogram for the time steps. In some implementations, the system can directly process the raw audio track associated with the video input.
In general, the encoder in the machine learning model can have different structures for different training requirements or purposes. For example, the encoder can include a joint transformer configured to process sets of unmasked tokens for the first modality and corresponding sets of unmasked tokens for the second modality to generate embedded tokens for the first and second modalities. As another example, the encoder can have a first transformer configured to process sets of unmasked tokens for the first modality to generate embedded tokens for the first modality, and a second transformer configured to process sets of unmasked tokens for the second modality to generate embedded tokens for the second modality. As another example, the encoder can have a transformer with parameters, wherein the transformer is configured to process, for a first time period, sets of unmasked tokens for the first modality using the parameters to update the parameters and generate embedded tokens for the first modality, and the transformer is configured to process, for a second time period, sets of unmasked tokens for the second modality using the updated parameters to update the parameters and generate embedded tokens for the second modality. As another example, the encoder can include a first transformer to process sets of unmasked tokens for the first modality to generate first intermediate results, a second transformer to process sets of unmasked tokens for the second modality to generate second intermediate results; and a joint transformer to process the first and second intermediate results to generate embedded tokens for the first and second modalities.

Similarly, the decoder in the machine learning model can have different structures similar to that of the encoder. For example, the decoder can include a joint transformer configured to process sets of embedded tokens for the first modality and corresponding sets of unmasked tokens for the second modality to reconstruct corresponding sets of masked tokens for the first modality and the second modality. As another example, the decoder can include a first transformer configured to process sets of embedded tokens for the first modality to reconstruct corresponding sets of masked tokens for the first modality, and a second transformer configured to process sets of embedded tokens for the second modality to reconstruct corresponding sets of masked tokens for the second modality. As another example, the decoder can include a transformer with parameters, wherein the transformer is configured to process, for a first time period, sets of embedded tokens for the first modality using the parameters to update the parameters and reconstruct corresponding sets of masked tokens for the first modality, the transformer is configured to process, for a second time period, sets of embedded tokens for the second modality using the updated parameters to update the parameters and reconstruct corresponding sets of masked tokens for the second modality. As another example, the decoder can include a first transformer to process sets of embedded tokens for the first modality to generate first intermediate reconstruction results, a second transformer to process sets of embedded tokens for the second modality to generate second intermediate reconstruction results, and a joint transformer to process the first and second intermediate reconstruction results to generate corresponding unmasked tokens for the first and second modalities.

The machine learning model can pick one from multiple different structures as a structure for the encoder and a structure for the decoder compatible with the encoder and for processing inputs having multiple modalities.

The objective function for the training can be defined based on a Mean-Square-Error (MSE) function, L1 error function, Huber error function, or other suitable functions for the first and second modalities. The object function can be different for different training schemes.

The masking process can be performed by a predetermined algorithm. For example, the system can execute a masking algorithm to randomly select patches of inputs for the first modality, the second modality, or both to be masked out. The masking ratio can range from 50% to 90% for different modality types. In addition, for encoders or decoders including a transformer, the masking algorithm can further include a token ID and a corresponding positional embedding for each input token (or patch). The transformer is configured to process a sequence of tokens simultaneously using the positional embedding.

After the machine learning model has been trained, the described techniques can further fine-tune the trained encoder using multiple fine-tuning examples. For example, the described method or system can receive multiple fine-tuning examples, each fine-tuning example including a portion for the first modality, or a portion for the second modality, or both; and update parameters of the encoder. The updating process can include processing each of the multiple fine-tuning examples using the encoder to generate a prediction; and updating the parameters of the encoder by optimizing a second objective function using the predictions and reference outputs.

The subject matter described in this specification can be implemented in particular embodiments so as to realize one or more of the following advantages. By establishing a machine learning model to process inputs with multiple modalities, the described techniques can improve the efficiency of learning more accurate and optimized representations of inputs than using a machine learning model capable of processing inputs with a single modality. The more accurate and optimized representations can further benefit one or more downstream tasks, as they can improve the prediction accuracy and the efficiency of generating predictions.

In addition, the described techniques are robust to different machine learning tasks or requirements because the described techniques can include a few different structures for the encoder and the decoder in the multi-modal model. A system or a method can have multiple combinations for the encoder structure and the decoder structure to achieve goals for different machine learning tasks.

Furthermore, the described techniques implement masking techniques to decrease the input size for processing, which facilitates the training process by reducing the computational cost and the memory bandwidth requirement. In addition, the encoder or the decoder can include a transformer using self-attention techniques to efficiently process a sequence of unmasked tokens for different modalities.

Certain novel aspects of the subject matter of this specification are set forth in the claims below, accompanied by further description in Appendix A.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and computeintensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Appendix A**

**Audiovisual Masked Autoencoders**

**Abstract**

*Can we leverage the audiovisual information already present in video to improve self-supervised representation learning? To answer this question, we study various pretraining architectures and objectives within the masked autoencoding framework, motivated by the success of similar methods in natural language and image understanding. We show that we can achieve significant improvements on audiovisual downstream classification tasks, surpassing the state-of-the-art on VGGSound and AudioSet. Furthermore, we can leverage our audiovisual pretraining scheme far multiple unimodal downstream tasks using a single audiovisual pretrained model. We additionally demonstrate the transferability of our representations, achieving state-of-the-art audiovisual results on Epic Kitchens without pretraining specifically for this dataset.*

**1. Introduction**

The computer vision community has witnessed rapid progress across a wide range of tasks and domains, driven by progressively larger models and datasets

$$[11, 23, 55,$$

$$60, 75],$$

However, pretraining models on large labelled datasets

$$[20, 47, 64]$$

and then finetuning on smaller target datasets is not scalable: Annotating large pretraining datasets is expensive and time-consuming, and larger, more performant models require more pretraining data

$$[22].$$

This has led to growing research in self-supervised pretraining methods which learn feature representations from unlabelled data, and has been extremely successful in natural language processing (NLP) for developing large language models

$$[12, 21, 62].$$

More recently, similar methods have been adopted in the vision community as well

$$[18, 35, 72].$$

In this paper, we propose to leverage the audiovisual information present in video to improve self-supervised representation learning. Despite recent advances in self-supervised image-

$$[10, 35]$$

and video-representation learning

[25, 66, 72],

these works still ignore the additional auditory information that is already present in their pretraining sets. Intuitively, we aim to exploit the correlations between

Pretraining

Finetuning

Figure 1. Overview of our Audiovisual Masked Autoencoder. We jointly encode and reconstruct audiovisual inputs, to leverage the correlations between the two modalities to learn stronger representations of the data. Our pretrained encoder can then be used for audiovisual, audio-only and video-only downstream tasks.

the modalities already present in video to learn stronger representations of the data for unimodal and multimodal downstream tasks. Our approach is further motivated by the fact that the world, and human perception of it, is inherently multimodal

[38, 61].

Our approach is inspired by the masked autoencoding framework

[16, 35],

which itself is based on similar masked data modelling approaches in NLP

[21]

and earlier works on denoising autoencoders

[52, 68].

We develop multiple pretraining architectures to jointly encode and reconstruct audiovisual inputs, and conduct thorough ablation studies to verify our design choices. To encourage further crossmodal information modelling, we also propose a novel "inpainting" objective which tasks our transformer model with predicting audio from video tokens and vice versa.

Our audiovisual pretraining enables us to achieve state-of-the-art results in downstream, audiovisual datasets such as VGGSound and AudioSet. Moreover, we show how we can reuse our audiovisual pretraining for unimodal, i.e. audio-only or video-only downstream classification tasks. Furthermore, we show how the representations learned by our model transfer between different pretraining and downstream finetuning datasets, enabling us to achieve state-of-the-art art results on the Epic Kitchens dataset.

## 2. Related Work

Early self-supervised learning works in vision were based on solving hand-designed pretext tasks such as relative patch prediction

[22]

and colourisation

[78].

Subsequent works converged on contrastive

[16, 34, 36, 50],

selfdistillation

[14, 31, 44]

or clustering-based

[8, 13]

objectives that encouraged a neural network to learn feature representations that were invariant to a predefined set of data transformations. These ideas were extended to multimodal scenarios as well, by predicting whether visual and audio signals come from the same video

[4, 5, 43, 51],

by audiovisual clustering

[3, 7]

or by using contrastive losses to encourage different modalities from the same input to have similar learned embeddings

[1, 2, 48, 53, 69, 76].

Our approach, in contrast, is based on masked data modelling - a paradigm which removes part of the input data and then learns to predict this removed content - and has gained traction due to the success of BERT

[21]

in NLP. BEIT

[10]

notably adopted BERT-style pretraining for images, using a discrete variational autoencoder

[57]

to produce a vocabulary of image tokens, and then predicting these tokens for masked image patches using a cross-entropy loss. Masked Autoencoders (MAE)

[35]

further showed that simply regressing to the original inputs in pixel-space was just as effective, and by only processing unmasked tokens in the encoder, training could be significantly accelerated. MFP

[72]

also considered alternate feature spaces for reconstruction, such as HOG

[18].

MAE has recently been extended to video

[25,66,70]

and audio

[17,38].

Our work also uses the masked autoencoding framework, but jointly models both audio and video, and is demonstrated on both unimodal (*i.e.* video-only and audio-only) and audiovisual downstream tasks where it outperforms supervised pretraining.

A few recent works have also addressed multimodal pretraining with MAE: OmniMAE

[27]

trains a single MAE model to reconstruct both images and video with shared weights among the modalities. The model is trained in a multi-task setting, where it can process either images or videos, but processes a single modality at a time. OmniMAE is thus a self-supervised equivalent of multi-task models such as PolyViT

[45]

and Omnivore

[28]

which are capable of performing multiple classification tasks, but only whilst processing a single task from a single modality at a time. Our model, in contrast, is developed to fuse information from different modalities, for both multimodal and unimodal downstream tasks. Bachmann *et al.*

[9]

on the other hand develop an MAE model for dense prediction tasks, where the model reconstructs images, depth maps and semantic segmentation maps of the image. Training this model, however, requires real or pseudo-labels for segmentation and depth, and hence, the model is not purely self-supervised like our approach. CroCo

[73]

reconstructs a masked image from a reference image for learning representations for 3D-vision tasks. Our modality-inpainting objective, in comparison, reconstructs one modality, such as an audio spectrogram, from another, such as video frames.

Finally, we note that vision transformer architectures

[23, 67]

have also been extended to fusing multiple modalities

[40, 49, 56].

Our work focuses on pretraining audiovisual models, and can in fact be used to initialise MBT

[49]

to improve the results that the original authors achieved with supervised pretraining.

**3. Audiovisual Masked Autoencoders**

We extend the masked-autoencoding framework

[35]

to learn audiovisual feature representations that can be leveraged for both multimodal and unimodal downstream tasks. This is done by jointly modelling both modalities to learn synergies between them. We begin with an overview of masked autoencoders

[35]

and transformers in vision in Sec. 3.1. Thereafter, we detail our different encoders (Sec. 3.2), decoders (Sec. 3.3) and objective functions (Sec. 3.4) as summarised in Fig. 2 and 3.

### 3.1. Background

Transformers are a generic architecture that operate on any input that can be converted into a sequence of tokens. Images are typically tokenised by performing a linear projection of non-overlapping "patches" of the input, which corresponds to a 2D convolution

[23].

For videos, a common method is to linearly project spatio-temporal "tubelets" which is equivalent to a 3D convolution

[6].

Audio inputs are commonly represented as spectrograms, which are 2-dimensional representations (along the time and frequency axes) in the Fourier domain of the input waveform, and can thus be treated as images with a single channel

[29]

(in fact, ImageNet pretrained weights have also been shown to be effective for initialising audio models

[29, 32, 33]

).

| a) "Early fusion" | b) Separate | c) Shared | d) Mid-fusion |

Figure 2. Transformer architectures for performing audiovisual fusion. Concatenating the tokens before passing them through the transformer corresponds to "early fusion" (a), whilst using two separate encoders (b) can be used to perform "late fusion" in the subsequent decoder. An alternate method of coupling modalities together is by sharing weights between the two encoders (c). Finally, mid-fusion (d) represents a balance between "early" and "late" fusion.

Dosovitskiy *et al.*

[23]

showed that transformers, using the same original architecture as

[67],

excelled at image recognition tasks when pretrained on large, supervised datasets such as ImageNet-21K

[20]

and JFT

$$[64].$$

More recently, approaches such as masked autoencoders

$$[35]$$

have demonstrated how vision transformers can be pretrained with only self-supervision on smaller datasets.

In the masked autoencoding framework

$$[35],$$

the input, x, is tokenised following previous supervised learning setups

$$[6, 23, 29].$$

We denote the resulting tokens as v = Tokenise(x) + p, where p denotes the positional embeddings, and $\mathbf{v} \in \mathbb{R}^{n \times d}$ where $n$ is the total number of tokens, and d is their hidden dimensionality.

A random subset of these tokens are then masked, and only the unmasked tokens are processed by the transformer encoder. We denote these steps as u = Mask(v; $\alpha$) and e = Encode(u), where u and $\mathbf{e} \in \mathbb{R}^{u \times d}$. Here $\alpha$ is the masking ratio, and $u = (1-\alpha)\cdot n$ is the number of unmasked tokens.

Learned mask tokens, $m \in \mathbb{R}^d$ are then inserted back into the input token sequence whilst also adding new positional embeddings, which we denote as $\text{Unshuffle}(\mathbf{e}, m) \in \mathbb{R}^{n \times d}$. Finally, a transformer decoder (which has the same structure as the encoder) processes these tokens, and the entire network is trained to reconstruct the original inputs corresponding to the tokens in pixel space, $\tilde{x}$, with a mean-squared error objective. Note that $\tilde{x}$ denotes the "patchified" version of the input x used as the reconstruction target. For example, for an image $\mathbf{x} \in \mathbb{R}^{H \times W \times 3}$, $\tilde{\mathbf{x}} \in \mathbb{R}^{H/p_h \cdot W/p_w \times p_h \cdot p_w \cdot 3}$, where $H$ and $W$ are the height and width of the image, and $p_h$ and $p_w$ are the patch sizes used for tokenisation. Additional standardisation may also be applied to $\tilde{x}$

$$[35, 66].$$

### 3.2. Audiovisual encoders

As shown in Fig. 2, we consider different encoders which fuse audio and visual information at different stages. In all cases, we use the standard transformer architecture

$$[23, 67].$$

**Early fusion** We first concatenate the unmasked tokens from the respective modalities, before passing them to a single transformer (Fig. 2a). This method is thus an "early" fusion

$$[41]$$

of audio and video. Due to the high masking ratios, $\alpha_a$ and $\alpha_v$ used for audio and video respectively, this is still computationally efficient and allows the encoder to model joint interactions between both modalities.

**Separate** This variant, in contrast, encodes audio and video tokens with two separate encoders each with different parameters. When using such an encoder, a "late fusion" of audio and video is performed in the decoder

$$[41,59]$$

when reconstructing the tokens. This strategy, however, allows us to obtain separate encoders for each modality after pretraining, which may be advantageous for finetuning on a unimodal (*i.e.* audio-only or video-only) downstream task.

**Mid-fusion** Here, we perform a middle-ground between the previous two approaches (Fig. 2d). Denoting the total number of transformer layers as *L,* the first *L - S* layers are separate for each modality as in the "Separate" encoding approach. The tokens are then concatenated into a single sequence, and then forwarded through a further S > 1 layers which jointly process both modalities.

**Shared** Finally, we explore coupling the two modalities together via parameter-sharing. As shown in Fig. 2c, the unmasked tokens for audio and video are encoded separately, but using the same transformer parameters in both cases. This is therefore equivalent to the "Separate" strategy, where the weights are tied between the encoders.

### 3.3. Decoders

In the masked autoencoding framework

$$[10,25,35],$$

the decoder is another transformer that reconstructs the masked tokens given the encoded tokens as context. The decoder has less capacity than the encoder, to force the encoder to learn discriminative features which can be used for reconstruction. Moreover, this also improves training efficiency, as mask tokens are also processed by the decoder.

Figure 3. Overview of modality inpainting for reconstructing video from audio. We initially jointly encode unmasked tokens from both audio and video. Then, we use all the encoded tokens of one modality (*i.e.* audio), and mask tokens from the other (*i.e.* video), to reconstruct the masked modality (*i.e.* video). Note that we can reconstruct all combinations of modalities, and show one for clarity.

Our decoder can follow any of the encoder structures described previously, whilst also being shallower. Note that when the "separate" encoding strategy is used, the same decoding strategy should not be used as this would amount to two separate, uncoupled masked autoencoder models.

### 3.4. Objective

After encoding the unmasked tokens, and inserting the mask tokens back into the sequence, we obtain the inputs to our decoder, namely $z_a \in \mathbb{R}^{n_a \times d}$ and $z_v \in \mathbb{R}^{n_v \times d}$. Here, $z_a$ and $z_v$ correspond to the audio and video modalities, respectively. Similarly, $n_a$ and $n_v$ are the total number of audio and video tokens respectively.

**Joint Reconstruction** This is a straightforward extension of the masked autoencoding objective

$$[35].$$

We reconstruct the original audio and video inputs that correspond to the mask tokens in $z_a$ and $z_v$ respectively, with the mean square error. This is denoted for audio as

$$\mathcal{L}_a(\mathbf{z_a}, \tilde{\mathbf{x}}_a) = \frac{1}{\alpha_a n_a} \sum_{i \in \mathcal{M}_a} ||\mathrm{Decode}(\mathbf{z}_{a,i}) - \tilde{\mathbf{x}}_{a,i}||^2, \quad (1)$$

where $\mathcal{M}_a$ denotes the set of mask token indices, as we only compute the reconstruction loss on these tokens like

[23,

35, 72].

The reconstruction loss for the video modality is defined similarly, and to avoid additional hyperparameters, we use equal loss weights for both audio and video.

**Modality inpainting** This objective aims to encourage stronger coupling between the two modalities by reconstructing one modality from the other. As shown in Fig. 3, we reconstruct the input video tubelets, $\tilde{x}_v$ using the encoded audio, $e_a$ and video mask tokens, $m_v$. Similarly, we reconstruct the input audio tokens, $\tilde{x}_a$, using the encoded video $e_v$ and audio mask tokens, $m_a$. Note that in order to use this objective, we require cross-modal encoding of the audio and video tokens, for example by using the "Early" or "Mid-fusion" encoding methods. Otherwise, the video tokens will not have the information necessary to reconstruct the audio tokens, and vice versa.

Another consideration is that there is no correspondence between the two sets of tokens (*i.e.* the $i^{th}$ audio token does not correspond to the $i^{th}$ video token, and the respective sequence lengths of the modalities, $n_a$ and $n_v$, are also typically different). This poses a challenge for reconstruction, as for example, we do not know which video tokens need to be reconstructed given the encoded audio- and masked video-tokens. To resolve this, we create an ordering in the sequence fed to our decoder, $\mathbf{z}$, by placing all the encoded tokens at the beginning of the sequence, and all of the mask tokens at the end (Fig. 3), and then only computing the reconstruction error (Eq. 1) on the mask tokens.

Concretely, this means that for reconstructing video, the token sequence is $z_v = [e_a \| \hat{m}_v]$, where $[\cdot\|\cdot]$ denotes concatenation. Note that the masked video token, $m_v$, is repeated $n_v - (1 - \alpha_a) \cdot n_a$ times to form, $\hat{m}_v$ and the reconstruction error is only computed on these tokens once they are decoded. Similarly, we reconstruct audio tokens by decoding the sequence $z_a = [e_v \| \hat{m}_a]$ where there are $n_a - (1 - \alpha_v) \cdot n_v$ mask tokens.

We experimentally evaluate our proposed pretraining architectures and objectives next.

## 4. Experimental Evaluation

We first describe our experimental setup in Sec. 4.1, before presenting ablation studies (Sec. 4.2) and comparisons to the state-of-the-art in Sec. 4.3. For reproducibility, we will release code and trained models on acceptance.

## 4.1. Experimental setup

**Datasets** We select 3 audiovisual datasets, where the audio and video signals are correlated and have been shown to be complementary

[43, 45, 71]

: VGGSound

[15],

AudioSet

[26]

and Epic Kitchens

[19].

We follow standard protocols for these datasets, which we describe below.

*VGGSound*

[15]

is an audiovisual benchmark of almost 200 000 video clips, that are 10 seconds long and collected from YouTube. The videos were selected such that the object that is generating the sound is also visible in the video. Each video is annotated with one of 309 classes. After removing the unavailable URLs from the data set, we end up with 170 000 samples for training and 14 448 for testing.

*AudioSet*

[26]

is the largest audiovisual dataset, consisting of almost 2 million videos from YouTube which are 10 seconds long. There are 527 classes, and the mean Average Precision (mAP) is the standard metric as the dataset is multilabel. The dataset is released as a set of URLs, and after accounting for videos that have been removed, we obtain 1.8 million training videos and 18589 validation examples. AudioSet is an extremely imbalanced dataset, and numerous works reporting on it have used complex, batch sampling strategies

[29, 30, 38]

or trained on a smaller, but more balanced subset

[49]

of 500 000 training videos which we denote as AS500K. For self-supervised pretraining, we use the full, imbalanced AudioSet dataset, which we denote as AS2M, whereas for finetuning we use AS500K.

*Epic Kitchens-100*

[19]

consists of 67000 egocentric videos spanning 100 hours. We report results following the standard "action recognition" protocol. Here, each video is labelled with a "verb" and a "noun", and the top-scoring verb and noun pair predicted by the network form an "action", and action accuracy is the primary metric. Following

[6, 45, 74],

we predict both verb and noun classes with a single network with two "heads", and equal loss weights.

In contrast to the other datasets, Epic Kitchens does not use YouTube videos, and as the videos are egocentric, there is a substantial domain shift between them. Therefore, Epic Kitchens is well-suited for evaluating the transferability of the feature representations learned on the other datasets.

**Implementation details** Our training hyperparameters are based on the public implementations of unimodal MAE models

[33, 66].

We use a masking ratio of $\alpha_v$ = 0.9 for video and $\alpha_a$ = 0.5 for audio. For both modalities, we use random token masking as prior works found this to outperform other masking patterns

[26, 35, 38].

Following

[26, 49],

audio for all datasets is sampled at 16 kHz and converted to a single channel. We extract log mel-spectrograms, using 128 frequency bins computed using a 25ms Hamming window with a hop-length of 10ms. Therefore the input dimension is 128 × 100t for t seconds of audio. Since we use 8 seconds of audio as

[49],

and a spectrogram patch size of 16 × 16, we have $n_a$ = 400 audio tokens. For video, following

[26, 66],

we randomly sample 16 frames, which we tokenise with tubelets of size 16 × 16 × 2. We include exhaustive details of all our pretraining and finetuning configurations in the supplementary.

**Network architecture** We use a standard vision transformer

[23],

namely the ViT-Base and Large models, following the same configurations as

[21, 23].

When using the "mid-fusion" encoder, we use S = 2 shared layers between the modalities, and ablate this choice in the supplementary.

Table 1. Ablation study of different pretraining architectures. Models are pretrained from random initialisation for 400 epochs on VGGSound, and then finetuned on the same dataset.

| Encoder | Decoder | Audio-only | Video-only | Audiovisual |
|---|---|---|---|---|
| Early fusion | Shared | 55.5 | 46.5 | 62.2 |
| Early fusion | Separate | 55.7 | 43.6 | 61.1 |
| Separate | Shared | 55.4 | 48.9 | 63.0 |
| Shared | Separate | 55.4 | 45.9 | 61.3 |
| Mid-fusion | Shared | 55.8 | 48.5 | 63.5 |
| Mid-fusion | Early | 55.5 | 48.5 | 63.3 |

**Finetuning** We first pretrain our network architectures from Sec. 3, and then evaluate the learned representations by finetuning on target datasets. The decoder of the model is only used during pretraining, and is discarded for finetuning as shown in Fig. 1.

For unimodal finetuning, we simply reuse the pretrained encoder of our model, and feed it a sequence of either audio or video tokens. For audio, this corresponds to AST

[29].

While for video, this is the unfactorised ViViT model

[6].

For audiovisual finetuning, we can reuse the same encoder structure as pretraining for encoding both modalities. Another alternative is to reuse the current state-of-the-art model, MBT

[47],

and initialise it with our self-supervised pretrained parameters. The MBT model is analogous to our "Mid-fusion" approach, it consists of separate transformer encoders for the audio and video modalities, with lateral connections between the two modalities after a predefined number of layers. When we use the "Separate" encoding strategy, we can initialise each stream of MBT with the corresponding encoder from the pretrained model. And when we use the "Early fusion" or "Shared" encoding methods, we can initialise each stream of MBT with the same encoder weights which are then untied from each other during training. In fact, the MBT authors used this method for initialising from ImageNet-21K with supervised pretraining

[49].

As detailed in the supplementary, and perhaps surprisingly, we found that audiovisual finetuning with the MBT model performed the best, regardless of the pretraining architecture. We therefore use this approach in all our audiovisual finetuning experiments. Morever, as MBT is the current state-of-the-art multimodal fusion model, it allows us to fairly compare our audiovisual self-supervised pretraining to supervised pretraining in state-of-the-art comparisons.

## 4.2. Ablation Studies

**Pretraining architecture** Table 1 compares the different pretraining architectures, described in Sec. 3.2 and 3.3. In this experiment, we pretrained all models from random initialisation on both audio and video on the VGGSound dataset using the "Joint Reconstruction" objective (Sec. 3.4) and the ViT-Base backbone for 400 epochs. We then evaluated the learned representations by finetuning on VGGSound. As shown in Tab. 1, we performed audio-only, Table 2. Ablation study of different pretraining objectives. Models are pre-trained for 400 epochs on VGGSound with the "Early fusion" encoder, and "Shared" decoder architecture.

| Objective | Audio-only | Video-only | Audiovisual |
|---|---|---|---|
| Joint reconstruction | 55.5 | 46.5 | 62.2 |
| Inpainting (video from audio) | 51.5 | 39.9 | 58.4 |
| Inpainting (audio from video) | 52.5 | 38.1 | 58.2 |
| Inpainting (both modalities) | 54.1 | 38.6 | 58.4 |

video-only and audiovisual finetuning (where we fuse both modalities) using the same pretrained model in all cases.
We observe that the different encoder architectures perform similarly for audio-only finetuning. However, there is more of a difference for video-only finetuning, with "Separate" and "Mid-fusion" performing the best. This makes intuitive sense - when we are using only a single modality during finetuning, we benefit from pretraining a specialised encoder for that modality.
For audiovisual finetuning, we also find that the "Separate" and "Mid-fusion" encoder strategies perform the best, with a sizable difference to the other approaches. A reason for this is that these encoding strategies closely follow the architecture of MBT

[49],

the current state-of-the-art multimodal fusion model, which we initialise with our pretrained weights. Moreover, separate parameters and processing streams for each modality increase model capacity.
In terms of the decoder architecture, Tab. 1 shows that the "Shared" decoder strategy consistently outperforms the "Separate" approach. This suggests that sharing parameters in the decoder among the two modalities allows better coupling between audio and video: A shared decoder requires the encoded audio tokens to contain information from the video tokens (and vice versa), in order to be able to reconstruct both sets of tokens using the same parameters.

**Objective** Table 2 compares our "Joint reconstruction" and "Modality inpainting" objectives (Sec. 3.4). In this experiment, we fix our architecture to the "Early fusion" encoder and "Shared" decoder for simplicity. For modality inpainting, as we reconstruct audio tokens from the encoded video tokens, and vice versa, we cannot use "Separate" encoders - it is necessary for the encoded audio tokens to contain information about the video tokens and vice versa. And indeed, training did not converge in this setting.

Table 2 shows that using the "Joint reconstruction" objective outperforms "Modality inpainting". A possible explanation is that "Modality inpainting" is more challenging, as the model is tasked with cross-modal reconstruction without using any encoded tokens of the target modality.

Nevertheless, analysis of the inpainting objective revealed interesting insights. Reconstructing video from audio results in better video representations (as shown by the higher video-only finetuning number). Similarly, reconstructing audio from video yields better audio-only repre-

Table 3. Comparison of single-modality and audiovisual pretraining on VGGSound. We use a ViT-Base model with 400 epochs of pretraining. AudioMAE and VideoMAE refer to an MAE pretrained only on audio and video respectively.

| Pretraining | Audio only | Video only | Audiovisual |
|---|---|---|---|
| AudioMAE | 55.7 | 42.1 | 58.3 |
| VideoMAE | 52.8 | 49.3 | 62.1 |
| Audiovisual. MAE | 55.8 | 48.5 | 63.5 |

Table 4. Transferability of learned representations by pretraining and finetuning across different datasets. We pretrain for the equivalent number of iterations on both datasets using ViT-Large as the backbone. Following standard protocol, we report Top-1 accuracy for VGGSound, mean Average Precision for AudioSet, and Top-1 action accuracy for Epic Kitchens.

| Pretrain \ Finetune | VGGSound | AudioSet | Epic Kitchens |
|---|---|---|---|
| VGGSound | **65.0** | 51.2 | **45.5** |
| AudioSet | 64.7 | **51.3** | 43.5 |

sentations. Inpainting both audio from video, and video from audio, was difficult to train, and also required careful learning rate tuning to converge (as illustrated by learning curves in the supplementary). Inpainting both modalities however yields better audio representations, but slightly worse video representations, than inpainting a single modality. Note that we use equal weights for the video inpainting and audio inpainting losses in order to reduce the number of pretraining hyperparameters. Future work remains to further improve the potential of this objective, for example by using a combination of our "Joint Reconstruction" and "Modality inpainting" losses instead.

As the "Joint reconstruction" objective outperforms "Modality inpainting", and is also simpler to implement and train, we use it for the remainder of our experiments.

**Comparing multimodal and unimodal pretraining** Table 3 compares our Audiovisual MAE to pretraining on audio only (AudioMAE), and video only (VideoMAE).

When finetuning with audio-only or video-only, our Audiovisual MAE performs similarly to AudioMAE and VideoMAE, respectively. However, we observe substantial benefits for audiovisual finetuning tasks where we improve by 5.2 and 1.4 points compared to AudioMAE and VideoMAE respectively. Note that when performing audiovisual finetuning with a single-modality MAE we initialise both modality-streams of MBT

[49]

with the parameters of either AudioMAE or VideoMAE, analogously to how the original authors initialised from ImageNet-pretrained models.

Therefore, we conclude that audiovisual pretraining is especially beneficial for audiovisual finetuning, and still effective if one is interested in unimodal downstream tasks.

**Transferability of learned representations** Our experiments thus far have pretrained and finetuned on the same

Table 5. Effect of number of pretraining epochs, using ViT-Large. We pretrain on VGGSound, and evaluate with audiovisual finetuning on both VGGSound and Epic Kitchens, to evaluate the transferability of the learned representation.

| Epochs | 200 | 400 | 800 | 1200 |
|---|---|---|---|---|
| VGGSound | 63.2 | 63.9 | **65.0** | 64.9 |
| Epic Kitchens | 41.8 | 42.5 | 45.5 | **46.0** |

dataset. To evaluate the transferability of learned representations, we pretrain and finetune across different datasets as shown in Tab. 4. In this experiment, we pretrain for an equivalent number of iterations on both datasets. This is 800 epochs on VGGSound, and 80 epochs on AudioSet as the dataset is 10 times larger than VGGSound.

When evaluating on either VGGSound or AudioSet, we observe small differences between pretraining on either dataset, indicating that the learned representations transfer across both datasets. As expected, pretraining and finetuning on the same dataset still produces the best results.

However, we observe larger differences on Epic Kitchens, where pretraining on VGGSound improves action accuracy by 2% compared to pretraining on AudioSet. Note that the domain of Epic Kitchens, which consists of videos taken by egocentric cameras in household environments, is quite different to that of the YouTube videos which comprise VGGSound and AudioSet. Therefore, evaluating transfer performance on Epic Kitchens is a challenging task.

The fact that pretraining on VGGSound performs better than the substantially larger AudioSet dataset suggests that the number of iterations of pretraining are more important than the actual size of the pretraining dataset, in line with some of the observations made by

[66].

**Effect of pretraining epochs** Table 5 compares the effect of the number of pretraining epochs on downstream, audiovisual finetuning accuracy. When pretraining and finetuning on the same VGGSound dataset, we observe that accuracy saturates at 800 pretraining epochs. However, when finetuning on the Epic Kitchens dataset, we can see that pretraining for longer, up to 1200 epochs, is still beneficial and we do not yet see saturation. The consistent improvements from pretraining for longer are in line with previous works on unimodal masked autoencoders

[25, 35, 64].

**Scaling up the backbone** Table 6 compares the ViT-Base and ViT-Large backbones for audiovisual finetuning on VGGSound. We consider two scenarios: First, pretraining with our proposed Audiovisual MAE on VGGSound, and second, using supervised pretraining with ImageNet-21K as done by the current state-of-the-art, MBT

[49].

With our audiovisual pretraining, we observe a solid improvement from scaling up our model backbone from ViT-Base to ViT-Large. MBT

[49]

which uses supervised pretraining does not benefit from increasing the model back-

Table 6. Effect of scaling up the backbone architecture from ViT-Base to ViT-Large, for both supervised and self-supervised pretraining. We report audiovisual accuracy on VGGSound. Supervised pretraining initialisation results are obtained from MBT [49].

| Initialisation | Base | Large |
|---|---|---|
| ImageNet-21K [49] (Supervised) | **64.1** | 61.4 |

(continued)

| Initialisation | Base | Large |
|---|---|---|
| Audiovisual MAE (Self-supervised) | **64.2** | **65.0** |

bone to ViT-Large, and in fact, experiences heavy overfitting which reduces its performance. Note that our improved accuracy is not due to additional regularisation during finetuning to counter overfitting, since we followed the public MBT code and used the same regularisers (stochastic depth

$$[37],$$

mixup

$$[77],$$

label smoothing

$$[65]$$

) as detailed in the supplementary. Our finding that masked pretraining produces more generalisable representations for finetuning larger models is also in line with

$$[35].$$

**Qualitative Results** We include visualisations of our reconstructions from pretraining in the supplementary.

### 4.3. State-of-the-art comparisons

We now compare our best models, using a ViT-Large backbone, on the audiovisual VGGSound, Epic Kitchens and AudioSet datasets. Note that these are only systemlevel comparisons as most prior works use supervised pretraining. And in particular for unimodal finetuning, our architecture is a vanilla ViT model without the modalityspecific designs used in other works. We are nevertheless able to achieve results surpassing, or competitive with, the state-of-the-art on a number of domains and modalities, showing the promise of our self-supervised pretraining.

**VGGSound** Table 7a shows that we outperform existing methods on the VGGSound dataset. Prior works on this dataset use supervised pretraining on ImageNet-21K. In contrast, we use self-supervised pretraining for 800 epochs, and do not use any additional labelled data. In the audio-only setting, we improve by 2.1 points over PolyViT

$$[45]$$

which was also trained on AudioSet, and by 4.9 points over MBT. In addition, we also achieve 65.0% Top-1 accuracy on audiovisual finetuning, improving upon

$$[43]$$

by 0.9 points.

**Epic Kitchens** We now transfer our VGGSound pretrained model from the previous experiment to the Epic Kitchens dataset. Epic Kitchens consists of egocentric videos, and hence it presents a challenging domain shift compared to the YouTube videos in our pretraining dataset. Nevertheless, Tab. 7c shows that we outperform MBT substantially by 2.6 points on audiovisual finetuning. On audio, we substantially outperform recent work

[65]

by 3.8 points. This is likely because our self-supervised pretraining provides better initialisation than the ImageNet-pretrained weights typically used by the audio community. Table 7. State-of-the-art comparisons on audiovisual datasets. Previous methods used supervised pretraining on additional data including ImageNet-21K (Im21K), ImageNet-1K (Im1K), AudioSet (AS) and Kinetics 400 (K400). Our approach, in contrast, is self-supervised, and uses no labelled data beyond the target dataset. We denote audio-only, video-only and audiovisual finetuning as "A", "V" and "AV" respectively. As detailed in the text, we found an error in the mAP evaluation code of MBT [49] and recomputed the correct metrics for it. The top-scoring entry is in bold, whilst the second-highest is underlined.

(a) VGGSound. We report Top-1 accuracy.

| Epochs | Pretraining | A | V | AV |
|---|---|---|---|---|
| Kazakos et al. [42] | Sup. Im1K | 52.5 | – | – |
| PlayItBack [63] | Sup. Im21K | 53.7 | – | – |
| PolyViT [43] | Sup. Im21K, AS | 55.1 | – | – |
| MBT [49] | Sup. Im21K | 52.3 | 51.2 | 64.1 |
| Ours | SSL VGGSound | 57.2 | 50.3 | 65.0 |

(b) AudioSet. We report the mAP for audiovisual fusion models.

| Epochs | Pretraining | Training set | A | V | AV |
|---|---|---|---|---|---|
| GBlend [71] | Im1K | AS-2M | 32.4 | 18.8 | 41.8 |
| Perceiver [40] | None | AS-2M | 38.4 | 25.8 | 44.2 |
| PerceiverIO [39] | None | AS-2M | – | – | 44.9 |
| Fayek et al. [24] | Im1K | AS-2M | 38.4 | 25.7 | 46.2 |
| MBT [49] | Im21K | AS-500K | 41.5 | 31.3 | 49.7 |
| Ours | SSL AS-2M | AS-500K | 45.7 | 30.6 | 51.3 |

(c) Epic Kitchens. We report Top-1 accuracies for verbs, nouns and actions (pairs of verbs and nouns).

| Method | Pretraining | Audio | | | Video | | | Audiovisual | | |
|---|---|---|---|---|---|---|---|---|---|---|
| | | Verb | Noun | Action | Verb | Noun | Action | Verb | Noun | Action |
| Damen et al. [19] | Sup. Im1K | 42.6 | 22.4 | 14.5 | – | – | – | – | – | – |
| Kazakos et al. [42] | Sup. VGGSound | 46.1 | 23.0 | 15.2 | – | – | – | – | – | – |
| PlayItBack [63] | Sup. Im21K | 47.0 | 23.1 | 15.9 | – | – | – | – | – | – |
| TSM [46] | Sup. Im1K + K400 | – | – | – | 67.9 | 49.0 | 38.3 | – | – | – |
| ViViT-L Fact. Encoder [6] | Sup. Im21K + K400 | – | – | – | 66.4 | 56.8 | 44.0 | – | – | – |
| MotionFormer [54] | Sup. Im21K + K400 | – | – | – | 67.0 | 58.5 | 44.5 | – | – | – |
| MTV [74] | Sup. Im21K + K400 | – | – | – | 67.8 | 60.5 | 46.7 | – | – | – |
| MBT [49] | Sup. Im21K | 44.3 | 22.4 | 13.0 | 62.0 | 56.4 | 40.7 | 64.8 | 58.0 | 43.4 |
| Ours | SSL VGGSound | 52.7 | 27.2 | 19.7 | 70.8 | 55.9 | 45.8 | 71.4 | 56.4 | 46.0 |

For video-only finetuning, our architecture corresponds to an unfactorised ViViT

[6].

We, however, still outperform the ViViT Factorised Encoder

[6]

which the authors showed was more accurate than the unfactorised model. The key difference is our initialisation - our model is initialised with self-supervised pretraining, whereas the other video models in Tab. 7c used supervised pretraining, first on ImageNet-21K and then Kinetics 400

[6, 54, 74].

And it is this self-supervised initialisation which enables better generalisation of our model to Epic Kitchens. Only recent work

[74],

outperforms our method for video-only finetuning with a specialised, multi-view architecture and additional supervised pretraining (ImageNet-21K and Kinetics 400).

Note that previous transformer models on this dataset

[6,

49, 54, 74],

are pretrained on ImageNet-21K and have a bias towards "noun" classes, performing well on these, and poorly on "verb" classes, compared to previous CNN models

[46].

Intuitively, this is because the ImageNet dataset is labelled with object classes corresponding to nouns, and models finetuned from this initialisation perform well on nouns, but struggle on verbs. Our self-supervised pretraining, in contrast, does not utilise class labels, and performs significantly better on verb classes across all modalities.

**AudioSet** Table 7b compares our model to other audiovisual models on the AudioSet dataset. We performed self-supervised pretraining on the full AudioSet-2M (AS2M). Following MBT

[49],

we finetuned on the AS500K training subset, which is slightly more balanced than the full AS2M. Other methods which finetune on the full AS2M have used complex minibatch sampling techniques

[71],

which we can avoid due to our use of AS500K.

We improve substantially upon previous methods on audiovisual finetuning by 1.6 points, and audio-only fine-tuning by 4.2 points. Note that we found an error in the mean Average Precision calculation code of

[49].

We have reported the corrected results, informed the authors, and included details in the supplementary.

## 5. Conclusion and Future Work

We have proposed Audiovisual MAE, a simple and effective self-supervised approach for learning powerful and generalisable audiovisual representations. The efficacy of our approach is demonstrated by our state-of-the-art results, in both audiovisual and unimodal downstream tasks, on the VGGSound, AudioSet and Epic Kitchens datasets.

In future work, we aim to leverage more powerful backbone architectures than a standard vision transformer

[20]

and improve our modality inpainting objective, for example, by combining it with the "Joint reconstruction" loss term. And although we have considered our modality-inpainting objective for representation learning, it may potentially be used tor generative applications too.

## References

[1] Hassan Akbari, Liangzhe Yuan, Rui Qian, Wei-Hong Chuang, Shih-Fu Chang, Yin Cui, and Boqing Gong. VATT:

Transformers for multimodal self-supervised learning from raw video, audio and text. In NeurIPS, 2021. 2

[2] Jean-Baptiste Alayrac, Adria Recasens, Rosalia Schneider, Relja Arandjelovic, Jason Ramapuram, Jeffrey De Fauw, Lucas Smaira, Sander Dieleman, and Andrew Zisserman. Self-supervised multimodal versatile networks. In *NeurIPS,* 2020. 2

[3] Humam Alwassel, Dhruv Mahajan, Bruno Korbar, Lorenzo Torresani, Bernard Ghanem, and Du Tran. Self-supervised learning by cross-modal audio-video clustering. In NeurIPS, 2020. 2

[4] Relja Arandjelovic and Andrew Zisserman. Look, listen and learn. In ICCV, 2017. 2

[5] Relja Arandjelovic and Andrew Zisserman. Objects that sound. In ECCV, 2018. 2

[6] Anurag Arnab, Mostafa Dehghani, Georg Heigold, Chen Sun, Mario Lucic, and Cordelia Schmid. ViViT: A video vision transformer. In *ICCV,* 2021. 2, 3, 5, 8

[7] Yuki Asano, Mandela Patrick, Christian Rupprecht, and Andrea Vedaldi. Labelling unlabelled videos from scratch with multi-modal self-supervision. In NeurIPS, 2020. 2

[8] Yuki M. Asano, Christian Rupprecht, and Andrea Vedaldi. Self-labelling via simultaneous clustering and representation learning. In ICLR, 2020. 2

[9] Roman Bachmann, David Mizrahi, Andrei Atanov, and Amir Zamir. MultiMAE: Multi-modal multi-task masked autoencoders. In ECCV, 2022. 2

[10] Hangbo Bao, Li Dong, and Furu Wei. BEiT: BERT pretraining of image transformers. In ICLR, 2022. 1, 2, 3

[11] Rishi Bommasani, Drew A Hudson, Ehsan Adeli, Russ Altman, Simran Arora, Sydney von Arx, Michael S Bernstein, Jeannette Bobg, Antoine Bosselut, Emma Brunskill, et al. On the opportunities and risks of foundation models. In arXiv preprint arXiv:2108.07258, 2021. 1

[12] Tom B Brown, Benjamin Mann, Nick Ryder, Melanie Subbiah, Jared Kaplan, Prafulla Dhariwal, Arvind Neelakantan, Pranav Shyam, Girish Sastry, Amanda Askell, et al. Language models are few-shot learners. In NeurIPS, 2020. 1

[13] Mathilde Caron, Piotr Bojanowski, Armand Joulin, and Matthijs Douze. Deep clustering for unsupervised learning of visual features. In ECCV, 2018. 2

[14] Mathilde Caron, Hugo Touvron, Ishan Misra, Herve Jegou, Julien Mairal, Piotr Bojanowski, and Armand Joulin. Emerging properties in self-supervised vision transformers. In *ICCV,* 2021. 2

[15] Honglie Chen, Weidi Xie, Andrea Vedaldi, and Andrew Zisserman. VGGSound: A large-scale audio-visual dataset. In ICASSP, 2020. 4

[16] Ting Chen, Simon Kornblith, Mohammad Norouzi, and Geoffrey Hinton. A simple framework for contrastive learning of visual representations. In ICML, 2020. 2

[17] Dading Chong, Helin Wang, Peilin Zhou, and Qingcheng Zeng. Masked spectrogram prediction for self-supervised audio pre-training. In arXiv preprint arXiv:2204.12768, 2022. 2

[18] Navneet Dalal and Bill Triggs. Histograms of oriented gradients for human detection. In CVPR, 2005. 2

[19] Dima Damen, Hazel Doughty, Giovanni Maria Farinella, Antonino Furnari, Evangelos Kazakos, Jian Ma, Davide Moltisanti, Jonathan Munro, Toby Perrett, Will Price, and Michael Wray. Rescaling egocentric vision: Collection, pipeline and challenges for EPIC-KITCHENS-100. IJCV, 2022. 4, 5, 8

[20] Jia Deng, Wei Dong, Richard Socher, Li-Jia Li, Kai Li, and Li Fei-Fei. ImageNet: A large-scale hierarchical image database. In CVPR, 2009. 1, 3

[21] Jacob Devlin, Ming-Wei Chang, Kenton Lee, and Kristina Toutanova. BERT: Pre-training of deep bidirectional transformers for language understanding. In NAACL, 2019. 1, 2, 5

[22] Carl Doersch, Abhinav Gupta, and Alexei A Efros. Unsupervised visual representation learning by context prediction. In ICCV, 2015. 2

[23] Alexey Dosovitskiy, Lucas Beyer, Alexander Kolesnikov, Dirk Weissenbom, Xiaohua Zhai, Thomas Unterthiner, Mostafa Dehghani, Matthias Minderer, Georg Heigold, Sylvain Gelly, et al. An image is words 16×6 words. Transformers for image recognition at scale. In ICLR, 2021. 1, 2, 3, 5, 8

[24] Haytham M Fayek and Anurag Kumar. Large scale audiovisual learning of sounds with weakly labeled data. In arXiv preprint arXiv:2006.01595, 2020. 8

[25] Christoph Feichtenhofer, Haoqi Pan, Yanghao Li, and Kaiming He. Masked autoencoders as spatiotemporal learners. In arXiv preprint arXiv:2205.09113, 2022. 1, 2, 3, 4, 5, 7

[26] Jort F. Gemmeke. Daniel P. W. Ellis. Dylan Freedman. Aren Jansen, Wade Lawrence, R. Channing Moore, Manoj Plakal, and Marvin Ritter. Audio Set: An ontology and humanlabeled dataset for audio events. In ICASSP, 2017. 4, 5

[27] Rohit Girdhar, Alaaeldin El-Nouby, Mannat Singh, Katyan Vasudev Alwala, Armand Joulin, and Ishan Misra. OmniMAE: Single model masked pretraining on images and videos. In arXiv preprint arXiv:2206.08356, 2022. 2

[28] Rohit Girdhar, Mannat Singh, Nikhila Ravi, Laurens van der Maaten, Armand Joulin, and Ishan Misra. Omnivore: A single model for many visual modalities. In CVPR, 2022. 2

[29] Yuan Gong, Yu-An Chung, and James Glass. AST: Audio spectrogram transformer. In Interspeech, 2021. 2, 3, 5

[30] Yuan Gong, Yu-An Chung, and James Glass. PSLA: Improving audio tagging with pretraining, sampling; labeling, and aggregation. Transactions on Audio, Speech, and Language Processing, 2021: 5

[31] Jean-Bastien Grill, Florian Strub, Florent Altché, Corentin Tallec, Pierre Richemond, Elena Buchatskaya, Carl Doersch, Bernardo Avila Pires, Zhaohan Guo, Mohammad Gheshlaghi Azar, Bilal Piot, koray kavukcuoglu, Remi Munos, and Michal Valko. Bootstrap your own latent - a new approach to self-supervised learning. In NeurIPS, 2020. 2

[32] Andrey Guzhov, Federico Raue, Jörn Hees, and Andreas Dengel. ESResNet: Environmental sound classification based on visual domain models. In ICPR, 2021. 2

[33] Grzegorz Gwardys and Daniel Grzywczak. Deep image features in music information retrieval. International Journal of Electronics and Telecommunications. 2014. 2

[34] R. Hadsell, S. Chopra, and Y. LeCun. Dimensionality reduction by learning an invariant mapping. In CVPR, 2006. 2

[35] Kaiming He, Xinlei Chen, Saining Xie, Yanghao Li, Piotr Dollár, and Ross Girshick. Masked autoencoders are scalable vision learners. In CVPR, 2022. 1, 2, 3, 4, 5, 7

Kaiming He, Haoqi Fan, Yuxin Wu, Saining Xie, and Ross Girshick. Momentum contrast for unsupervised visual representation learning. In CVPR, 2020. 2

Gao Huang, Yu Sun, Zhuang Liu, Daniel Sedra, and Kilian Weinberger. Deep networks with stochastic depth. In ECCV, 2016. 7

Po-Yao Huang, Hu Xu, Juncheng Li, Alexei Baevski, Michael Auli, Wojciech Galuba, Florian Metze, and Christoph Feichtenhofer. Masked autoencoders that listen. In arXiv preprint arXiv:2207.06405, 2022. 2, 5

Andrew Jaegle, Sebastian Borgeaud, Jean-Baptiste Alayrac, Carl Doersch, Catalin Ionescu, David Ding, Skanda Koppula, Daniel Zoran, Andrew Brock, Evan Shelhamer, et al. Perceiver IO: A general architecture for structured inputs & outputs. In ICLR, 2022. 8

Andrew Jaegle, Felix Gimeno, Andy Brock, Oriol Vinyals, Andrew Zisserman, and Joao Carreira. Perceiver: General perception with iterative attention. In ICML, 2021. 2, 4, 8

Andrej Karpathy, George Toderici, Sanketh Shetty, Thomas Leung. Rahul Sukthankar. and Li Fci-Fci. Large-scale video classification with convolutional neural networks. In CVPR, 2014. 3

Evangelos Kazakos, Arsha Nagrani, Andrew Zisserman,and Dima Damen. Slow-fast auditory streams for audio recognition. In ICASSP, 2021. 8

Bruno Korbar, Du Tran, and Lorenzo Torresani. Cooperative learning of audio and video models from self-supervised synchronization. In NeurIPS, 2018. 2

Kuang-Huei Lee, Anurag Amab, Sergio Guadarrama, John Canny, and Ian Fischer. Compressive visual representations. In NeurIPS, 2021. 2

Valerii Likhosherstov, Anurag Amab, Krzysztof Choromanski, Mario Lucic, Yi Tay, Adrian Weller, and Mostafa Dehghani. PolyViT: Co-training vision transformers on images, videos and audio. In arXiv preprint arXiv:2111.12993, 2021. 2, 7, 8

Ji Lin, Chuang Gan, and Song Han. Tsm: Temporal shift module for efficient video understanding. In CVPR, 2019. 8

Dhruv Mahajan, Ross Girshick, Vignesh Ramanathan, Kaiming He, Manohar Paluri, Yixuan Li, Ashwin Bharambe, and Laurens Van Der Maaien. Exploring the limits of weakly supervised pretraining. In ECCV, 2018. 1

Antoine Miech, Jean-Baptiste Alayrac, Lucas Smaira, Ivan Laptev, Josef Sivic, and Andrew Zisserman. End-to-end learning of visual representations from uncurated instructional videos. In CVPR, 2020. 2

Arsha Nagrani, Shan Yang, Anurag Amab, Aren Jansen, Cordelia Schmid, and Chen Sun. Attention bottlenecks for multimodal fusion. In NeurIPS, 2021. 2, 4, 5, 6, 7, 8

Aaron van den Oord, Yazhe Li, and Oriol Vinyals. Representation learning with contrastive predictive coding. In arXiv preprint $\alpha$rXiv:1807.03748, 2018. 2

Andrew Owens and Alexei A Efros. Audio-visual scene analysis with self-supervised multisensory features. In ECCV, 2018. 2

Deepak Pathak, Philipp Krahenbuhl, Jeff Donahue, Trevor Darrell, and Alexei A Efros. Context encoders: Feature learning by inpainting. In CVPR, 2016. 2

Mandela Patrick, Yuki M Asano, Polina Kuznetsova, Ruth Fong, Joño F Henriques, Geoffrey 2weig, and Andrea Vedaldi. On compositions of transformations in contrastive self-supervised learning. In ICCV, 2021. 2

Mandela Patrick, Dylan Campbell, Yuki Asano, Ishan Misra, Florian Metze, Christoph Feichtenhofer, Andrea Vedaldi, and João F Henriques. Keeping your eye on the ball: Trajectory attention in video transformers. In NeurIPS, 2021. 8

Alec Radford, Jong Wook Kim, Chris Hallacy, Aditya Ramesh, Gabriel Goh, Sandhini Agarwal, Girish Sastry, Amanda Askell, Pamela Mishkin, Jack Clark, et al. Learning transferable visual models from natural language supervision. In ICML, 2021. 1

Mercy Ramazanova, Victor Escorcia, Fabian Caba Heilbron, Chen Zhao, and Bernard Ghanem. OWL (observe, watch, listen): Localizing actions in egocentric video via audiovisual temporal context. In BMVC, 2022. 2

Aditya Ramesh, Mikhail Pavlov, Gabriel Goh, Scott Gray, Chelsea Voss. Alee Radford. Mark Chen, and Ilya Sutskcvcr. Zero-shot text-to-image generation. In ICML, 2021. 2

Ladan Shams and Robyn Kim. Crossmodal. influences on visual perception. Physics of life reviews, 7(3):269-284, 2010. 1

Karen Simonyan and Andrew Zisserman. Two-stream convolutional networks for action recognition in videos. In NeurIPS, 2014. 3

Amanpreet Singh, Ronghang Flu, Vedanuj Goswami, Guillaume Couairon, Wojciech Galuba, Marcus Rohrbach, and Douwe Kicla. Flava: A foundational language and vision alignment model. In CVPR, 2022. 1

Linda Smith and Michael Gasser. The development of embodied cognition: Six lessons from babies. Artificial life, 11(1-2): 13-29, 2005. 1

Shaden Smith, Mostofa Parwary, Brandon Norick, Patrick LeGresley, Samyam Rajbhandari, Jared Casper, Zhun Liu, Shrimai Prabhumoye, George Zerveas, Vijay Korthikanti, et al. Using DeepSpeed and Megatron to train Megatron-Turing NLG 530B, a large-scale generative language model. In arXiv preprint arXiv:2201.11990, 2022. 1

Alexandros Stergiou and Dima Damen. Play it back: Iterative attention for audio recognition. In arXiv preprint a.rXiv:2210.11328, 2022. 7, 8

Chen Sun, Abhinav Shrivastava, Saurabh Singh, and Abhinav Gupta. Revisiting unreasonable effectiveness of data in deep learning era. In ICCV, 2017. 1, 3

Christian Szegedy, Vincent Vanhoucke, Sergey Ioffe, Jon Shlens, and Zbigniew Wojna. Rethinking the inception architecture for computer vision. In CVPR, 2016. 7

Zhan Tong, Yibing Song, Jue Wang, and Limin Wang. VideoMAE: Masked autoencoders are data-efficient learners for self-supervised video pre-training. In arXiv preprint arXiv:2203.12602, 2022. 1, 2, 3, 5, 7

Ashish Vaswani, Noam Shazeer, Niki Parmar, Jakob Uszkoreit, Llion Jones, Aidan N Gomez, Lukasz Kaiser, and Illia Polosukhin. Attention is all you need. In NeurIPS, 2017. 2,

Pascal Vincent, Hugo Larochelle, Yoshua Bengio, and Pierre-Antoine Manzagol. Extracting and composing robust features with denoising autoencoders. In ICML, 2008. 2

Luyu Wang, Pauline Luc, Adria Recasens, Jean-Baptiste Alayrac, and Aaron van den Oord. Multimodal self-supervised learning of general audio representations. In arXiv preprint arXiv:2104.12807, 2021. 2

Rui Wang, Dongdong Chen, Zuxuan Wu, Yinpeng Chen, Xiyang Dai, Mengchen Liu, Yu-Gang Jiang, Luowei Zhou, and Lu Yuan. Bevt: Bert pretraining of video transformers. In CVPR, 2022. 2

Weiyao Wang, Du Tran, and Matt Feiszli. What makes training multi-modal classification networks hard? In. CVPR, 2020. 4, 8

Chen Wei, Haoqi Fan, Saining Xie, Chao-Yuan Wu, Alan Yuille, and Christoph Feichtenhofer, Masked feature prediction for self-supervised visual pre-training. In CVPR, 2022. 1,2,4

Philippe Weinzaepfel, Vincent Leroy, Thomas Lucas, Romain Brégier, Yohann Cabon, Vaibhav Arora, Leonid Antsfeld, Boris Chidlovskii, Gabriela Csurka, and Jérôme Revaud. CroCo: Self-supervised pre-training for 3d vision tasks by cross-view completion. In NeurIPS, 2022. 2

Shen Yan, Xuehan Xiong, Anurag Arnab, Zhichao Lu, Mi Zhang, Chen Sun, and Cordelia Schmid. Multiview transformers for video recognition. In CVPR, 2022. 5, 8

Lu Yuan, Dongdong Chen, Yi-Ling Chen, Noel Codella, Xiyang Dai, Jianfeng Gao, Houdong Hu, Xuedong Huang, Boxin Li, Chunyuan Li, et al. Florence: A new foundation model for computer vision. In arXiv preprint arXiv:2111.11432, 2021. 1

Rowan Zellers, Ximing Lu, Jack Hessel, Youngjae Yu, Jae Sung Park, Jize Cao, Ali Farhadi, and Yejin Choi. MERLOT: Multimodal neural script knowledge models. In NeurIPS, 2021. 2

Hongyi Zhang, Moustapha Cisse, Yann N. Dauphin, and David Lopez-Paz. mixup: Beyond empirical risk minimization. In ICIR, 2018. 7

Richard Zhang, Phillip Isola, and Alexei A. Efros. Colorful image colorization. In ECCV, 2016. 2

## Claims

1. A method for training a machine learning model, comprising:

   receiving a plurality of training examples for training a machine learning model, wherein each of the plurality of training examples includes a set of unmasked tokens for a first modality and a set of unmasked tokens for a second modality;
   for each training example of the plurality of training examples:

   processing, by an encoder of the machine learning model, the set of unmasked tokens for the first modality of the training example and the set of unmasked tokens for the second modality of the training example to generate a set of embedded tokens for the first modality;

processing, by a decoder of the machine learning model, at least the set of embedded tokens for the first modality to reconstruct a set of masked tokens for the first modality; and
determining a loss based on the reconstructed set of masked tokens tor the first modality and a set of masked tokens for the first modality according to an objective function;

optimizing the objective function to decrease the losses for the plurality of training examples; and
updating model parameters of the machine learning model based on the optimizing of the objective function.

2.   The method of claim 1, to generate the plurality of training examples, the method further comprises:

receiving a plurality of input examples, wherein each of the plurality of input examples includes a first portion for a first modality and a second portion for a second modality; and
generating a training example for each of the plurality of input examples, comprising:

masking the first portion of the first modality for the input example to generate the set of masked tokens for the first modality and the set of unmasked tokens for the first modality; and
masking the second portion of the second modality for the input example to generate a set of masked tokens for the second modality and a set of unmasked tokens for the second modality.

3.   The method of claim 1, wherein reconstructing the set of masked tokens for the first modality further comprises:
processing, by the decoder of the machine learning model, (i) the set of embedded tokens for the first modality, and (ii) a set of unmasked tokens for the second modality to reconstruct the set of masked tokens for the first modality.

4.   The method of claim 1, wherein reconstructing the set of masked tokens for the first modality further comprises:
processing, by the decoder of the machine learning model, (i) the set of embedded tokens for the first modality, and (ii) a set of embedded masked tokens for the second modality generated by the encoder for the training example to reconstruct the set of masked tokens for the first modality.

5.   The method of claim 1, wherein the first modality is a video modality and the second modality is an audio modality.

6.   The method of claim 1, wherein the first modality is an audio modality and the second modality is a video modality.

7.   The method of claim 2, wherein one of the plurality of input examples includes a video input and a corresponding audio input, wherein the audio input includes a raw audio track or a spectrogram of the raw audio track.

8.   The method of claim 1, wherein the encoder includes a joint transformer configured to process sets of unmasked tokens for the first modality and corresponding sets of unmasked tokens for the second modality to generate embedded tokens for the first and second modalities.

9.   The method of claim 1, wherein the encoder includes:

a first transformer configured to process sets of unmasked tokens for the first modality to generate embedded tokens for the first modality; and
a second transformer configured to process sets of unmasked tokens for the second modality to generate embedded tokens for the second modality.

10.  The method of claim 1, wherein the encoder includes a transformer with parameters, wherein the transformer is configured to process, for a first time period, sets of unmasked tokens for the first modality using the parameters to update the parameters and generate embedded tokens for the first modality, and the transformer is configured to process, for a second time period, sets of unmasked tokens for the second modality using the updated parameters to update the parameters and generate embedded tokens for the second modality.

11.  The method of claim 1, wherein the encoder includes:

a first transformer to process sets of unmasked tokens for the first modality to generate first intermediate results;
a second transformer to process sets of unmasked tokens for the second modality to generate second intermediate results; and
a joint transformer to process the first and second intermediate results to generate embedded tokens for the first and second modalities.

12. The method of claim 1, wherein the decoder includes a joint transformer configured to process sets of embedded tokens for the first modality and corresponding sets of unmasked tokens for the second modality to reconstruct corresponding sets of masked tokens for the first modality and the second modality.

13. The method of claim 1, wherein the decoder includes a first transformer configured to process sets of embedded tokens for the first modality to reconstruct corresponding sets of masked tokens for the first modality, and a second transformer configured to process sets of embedded tokens for the second modality to reconstruct corresponding sets of masked tokens for the second modality.

14. The method of claim 1, wherein the decoder includes a transformer with parameters, wherein the transformer is configured to process, for a first time period, sets of embedded tokens for the first modality using the parameters to update the parameters and reconstruct corresponding sets of masked tokens for the first modality, the transformer is configured to process, for a second time period, sets of embedded tokens for the second modality using the updated parameters to update the parameters and reconstruct corresponding sets of masked tokens for the second modality.

15. The method of claim 1, wherein the decoder includes:

   a first transformer to process sets of embedded tokens for the first modality to generate first intermediate reconstruction results;
   a second transformer to process sets of embedded tokens for the second modality to generate second intermediate reconstruction results; and
   a joint transformer to process the first and second intermediate reconstruction results to generate corresponding unmasked tokens for the first and second modalities.

16. The method of claim 1, wherein the objective function is defined based on one of a Mean-Square-Error (MSE) function, L1 error function, or Huber error function for the first and second modalities.

17. The method of claim 2, wherein masking the first portions for the first modality and the second portions for the second modality according to a predetermined algorithm, wherein the masking process further comprises associating each token with a corresponding positional embedding.

18. The method of claim 1, after the machine learning model has been trained, further comprising:

   receiving a plurality of fine-tuning examples, each fine-tuning example including a portion for the first modality, or a portion for the second modality, or both; and
   updating parameters of the encoder, comprising:

      processing each of the plurality of fine-tuning examples using the encoder to generate a prediction; and
      updating the parameters of the encoder by optimizing a second objective function using the predictions and reference outputs.

19. A system comprising one or more computers and one or more storage devices storing instructions that, when executed by one or more computers, cause the one or more computers to perform respective operations of any one of claims 1-18.

20. One or more non-transitory computer-readable storage media storing instructions, that when executed by one or more computers, cause the one or more computers to perform respective operations of any one of claims 1-18.

Europäisches
Patentamt

European
Patent Office

Office européen
des brevets

# EUROPEAN SEARCH REPORT

Application Number

EP 22 29 0066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUAN GONG ET AL: "Contrastive Audio-Visual Masked Autoencoder", ARXIV.ORG, CORNELL UNIVERSITY LIBRARY, 201 OLIN LIBRARY CORNELL UNIVERSITY ITHACA, NY 14853, 2 October 2022 (2022-10-02), XP091344134, * abstract * * Sections 1-3; figure 1 * | 1-15 | INV. G06N3/0455 G06N3/0895 G06T7/00 |
| X,D | ROMAN BACHMANN ET AL: "MultiMAE: Multi-modal Multi-task Masked Autoencoders", ARXIV.ORG, CORNELL UNIVERSITY LIBRARY, 201 OLIN LIBRARY CORNELL UNIVERSITY ITHACA, NY 14853, 4 April 2022 (2022-04-04), XP091199649, * abstract * * Section 3; figure 2 * | 1-15 | |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 20 September 2023 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Non-patent literature cited in the description**

- **HASSAN AKBARI ; LIANGZHE YUAN ; RUI QIAN ; WEI-HONG CHUANG ; SHIH-FU CHANG ; YIN CUI ; BOQING GONG.** VATT: Transformers for multimodal self-supervised learning from raw video, audio and text. *NeurIPS,* 2021, 2
- **HUMAM ALWASSEL ; DHRUV MAHAJAN ; BRUNO KORBAR ; LORENZO TORRESANI ; BERNARD GHANEM ; DU TRAN.** Self-supervised learning by cross-modal audio-video clustering. *NeurIPS,* 2020, 2
- **RELJA ARANDJELOVIC ; ANDREW ZISSERMAN.** Look, listen and learn. *ICCV,* 2017, 2
- **RELJA ARANDJELOVIC ; ANDREW ZISSERMAN.** Objects that sound. *ECCV,* 2018, 2
- **YUKI ASANO ; MANDELA PATRICK ; CHRISTIAN RUPPRECHT ; ANDREA VEDALDI.** Labelling unlabelled videos from scratch with multi-modal self-supervision. *NeurIPS,* 2020, 2
- **YUKI M. ASANO ; CHRISTIAN RUPPRECHT ; ANDREA VEDALDI.** Self-labelling via simultaneous clustering and representation learning. *ICLR,* 2020, 2
- **ROMAN BACHMANN ; DAVID MIZRAHI ; ANDREI ATANOV ; AMIR ZAMIR.** MultiMAE: Multi-modal multi-task masked autoencoders. *ECCV,* 2022, 2
- **HANGBO BAO ; LI DONG ; FURU WEI.** BEiT: BERT pretraining of image transformers. *ICLR,* 2022, vol. 1 (2), 3
- **RISHI BOMMASANI ; DREW A HUDSON ; EHSAN ADELI ; RUSS ALTMAN ; SIMRAN ARORA ; SYDNEY VON ARX ; MICHAEL S BERNSTEIN ; JEANNETTE BOBG ; ANTOINE BOSSELUT ; EMMA BRUNSKILL et al.** On the opportunities and risks of foundation models. *arXiv preprint arXiv:2108.07258,* 2021, 1
- **TOM B BROWN ; BENJAMIN MANN ; NICK RYDER ; MELANIE SUBBIAH ; JARED KAPLAN ; PRAFULLA DHARIWAL ; ARVIND NEELAKANTAN ; PRANAV SHYAM ; GIRISH SASTRY ; AMANDA ASKELL et al.** Language models are few-shot learners. *NeurIPS,* 2020, 1
- **MATHILDE CARON ; PIOTR BOJANOWSKI ; ARMAND JOULIN ; MATTHIJS DOUZE.** Deep clustering for unsupervised learning of visual features. *ECCV,* 2018, 2
- **HONGLIE CHEN ; WEIDI XIE ; ANDREA VEDALDI ; ANDREW ZISSERMAN.** VGGSound: A large-scale audio-visual dataset. *ICASSP,* 2020, 4
- **TING CHEN ; SIMON KORNBLITH ; MOHAMMAD NOROUZI ; GEOFFREY HINTON.** A simple framework for contrastive learning of visual representations. *ICML,* 2020, 2
- **DADING CHONG ; HELIN WANG ; PEILIN ZHOU ; QINGCHENG ZENG.** Masked spectrogram prediction for self-supervised audio pre-training. *arXiv preprint arXiv:2204.12768,* 2022, 2
- **NAVNEET DALAL ; BILL TRIGGS.** Histograms of oriented gradients for human detection. *CVPR,* 2005, 2
- **DIMA DAMEN ; HAZEL DOUGHTY ; GIOVANNI MARIA FARINELLA ; ANTONINO FURNARI ; EVANGELOS KAZAKOS ; JIAN MA ; DAVIDE MOLTISANTI ; JONATHAN MUNRO ; TOBY PERRETT ; WILL PRICE.** Rescaling egocentric vision: Collection, pipeline and challenges for EPIC-KITCHENS-100. *IJCV,* 2022, vol. 4 (5), 8
- **JIA DENG ; WEI DONG ; RICHARD SOCHER ; LI-JIA LI ; KAI LI ; LI FEI-FEI.** ImageNet: A large-scale hierarchical image database. *CVPR,* 2009, vol. 1, 3
- **JACOB DEVLIN ; MING-WEI CHANG ; KENTON LEE ; KRISTINA TOUTANOVA.** BERT: Pre-training of deep bidirectional transformers for language understanding. *NAACL,* 2019, vol. 1 (2), 5
- **CARL DOERSCH ; ABHINAV GUPTA ; ALEXEI A EFROS.** Unsupervised visual representation learning by context prediction. *ICCV,* 2015, 2
- **ALEXEY DOSOVITSKIY ; LUCAS BEYER ; ALEXANDER KOLESNIKOV ; DIRK WEISSENBOM ; XIAOHUA ZHAI ; THOMAS UNTERTHINER ; MOSTAFA DEHGHANI ; MATTHIAS MINDERER ; GEORG HEIGOLD ; SYLVAIN GELLY et al.** An image is words 16×6 words. Transformers for image recognition at scale. *ICLR,* 2021, vol. 1 (2), 3, , 5, , 8
- **HAYTHAM M FAYEK ; ANURAG KUMAR.** Large scale audiovisual learning of sounds with weakly labeled data. *arXiv preprint arXiv:2006.01595,* 2020, 8
- **CHRISTOPH FEICHTENHOFER ; HAOQI PAN ; YANGHAO LI ; KAIMING HE.** Masked autoencoders as spatiotemporal learners. *arXiv preprint arXiv:2205.09113,* 2022, vol. 1 (2), 3, , 4, , 5, , 7

- **JORT F. GEMMEKE ; DANIEL P. W. ELLIS ; DYLAN FREEDMAN ; AREN JANSEN ; WADE LAWRENCE ; R. CHANNING MOORE ; MANOJ PLAKAL ; MARVIN RITTER.** Audio Set: An ontology and humanlabeled dataset for audio events. *ICASSP,* 2017, vol. 4, 5
- **ROHIT GIRDHAR ; ALAAELDIN EL-NOUBY ; MANNAT SINGH ; KATYAN VASUDEV ALWALA ; ARMAND JOULIN ; ISHAN MISRA.** OmniMAE: Single model masked pretraining on images and videos. *arXiv preprint arXiv:2206.08356,* 2022, 2
- **ROHIT GIRDHAR ; MANNAT SINGH ; NIKHILA RAVI ; LAURENS VAN DER MAATEN ; ARMAND JOULIN ; ISHAN MISRA.** Omnivore: A single model for many visual modalities. *CVPR,* 2022, 2
- **YUAN GONG ; YU-AN CHUNG ; JAMES GLASS.** AST: Audio spectrogram transformer. *Interspeech,* 2021, vol. 2 (3), 5
- **YUAN GONG ; YU-AN CHUNG ; JAMES GLASS.** PSLA: Improving audio tagging with pretraining, sampling; labeling, and aggregation. *Transactions on Audio, Speech, and Language Processing,* 2021, 5
- **JEAN-BASTIEN GRILL ; FLORIAN STRUB ; FLORENT ALTCHÉ ; CORENTIN TALLEC ; PIERRE RICHEMOND ; ELENA BUCHATSKAYA ; CARL DOERSCH ; BERNARDO AVILA PIRES ; ZHAOHAN GUO ; MOHAMMAD GHESHLAGHI AZAR.** Bootstrap your own latent - a new approach to self-supervised learning. *NeurIPS,* 2020, 2
- **ANDREY GUZHOV ; FEDERICO RAUE ; JÖRN HEES ; ANDREAS DENGEL.** ESResNet: Environmental sound classification based on visual domain models. *ICPR,* 2021, 2
- **GRZEGORZ GWARDYS ; DANIEL GRZYWCZAK.** Deep image features in music information retrieval. *International Journal of Electronics and Telecommunications,* 2014, 2
- **R. HADSELL ; S. CHOPRA ; Y. LECUN.** Dimensionality reduction by learning an invariant mapping. *CVPR,* 2006, 2
- **KAIMING HE ; XINLEI CHEN ; SAINING XIE ; YANGHAO LI ; PIOTR DOLLÁR ; ROSS GIRSHICK.** Masked autoencoders are scalable vision learners. *CVPR,* 2022, vol. 1 (2), 3, , 4, , 5, , 7
- **KAIMING HE ; HAOQI FAN ; YUXIN WU ; SAINING XIE ; ROSS GIRSHICK.** Momentum contrast for unsupervised visual representation learning. *CVPR,* 2020, 2
- **GAO HUANG ; YU SUN ; ZHUANG LIU ; DANIEL SEDRA ; KILIAN WEINBERGER.** Deep networks with stochastic depth. *ECCV,* 2016, 7
- **PO-YAO HUANG ; HU XU ; JUNCHENG LI ; ALEXEI BAEVSKI ; MICHAEL AULI ; WOJCIECH GALUBA ; FLORIAN METZE ; CHRISTOPH FEICHTENHOFER.** Masked autoencoders that listen. *arXiv preprint arXiv:2207.06405,* 2022, vol. 2, 5
- **ANDREW JAEGLE ; SEBASTIAN BORGEAUD ; JEAN-BAPTISTE ALAYRAC ; CARL DOERSCH ; CATALIN IONESCU ; DAVID DING ; SKANDA KOPPULA ; DANIEL ZORAN ; ANDREW BROCK ; EVAN SHELHAMER et al.** Perceiver IO: A general architecture for structured inputs & outputs. *ICLR,* 2022, 8
- **ANDREW JAEGLE ; FELIX GIMENO ; ANDY BROCK ; ORIOL VINYALS ; ANDREW ZISSERMAN ; JOAO CARREIRA.** Perceiver: General perception with iterative attention. *ICML,* 2021, vol. 2 (4), 8
- **ANDREJ KARPATHY ; GEORGE TODERICI ; SANKETH SHETTY ; THOMAS LEUNG ; RAHUL SUKTHANKAR ; LI FCI-FCI.** Large-scale video classification with convolutional neural networks. *CVPR,* 2014, 3
- **EVANGELOS KAZAKOS ; ARSHA NAGRANI ; ANDREW ZISSERMAN ; DIMA DAMEN.** Slow-fast auditory streams for audio recognition. *ICASSP,* 2021, 8
- **BRUNO KORBAR ; DU TRAN ; LORENZO TORRESANI.** Cooperative learning of audio and video models from self-supervised synchronization. *NeurIPS,* 2018, 2
- **KUANG-HUEI LEE ; ANURAG AMAB ; SERGIO GUADARRAMA ; JOHN CANNY ; IAN FISCHER.** Compressive visual representations. *NeurIPS,* 2021, 2
- **VALERII LIKHOSHERSTOV ; ANURAG AMAB ; KRZYSZTOF CHOROMANSKI ; MARIO LUCIC ; YI TAY ; ADRIAN WELLER ; MOSTAFA DEHGHANI.** PolyViT: Co-training vision transformers on images, videos and audio. *arXiv preprint arXiv:2111.12993,* 2021, vol. 2 (7), 8
- **JI LIN ; CHUANG GAN ; SONG HAN.** Tsm: Temporal shift module for efficient video understanding. *CVPR,* 2019, 8
- **DHRUV MAHAJAN ; ROSS GIRSHICK ; VIGNESH RAMANATHAN ; KAIMING HE ; MANOHAR PALURI ; YIXUAN LI ; ASHWIN BHARAMBE ; LAURENS VAN DER MAAIEN.** Exploring the limits of weakly supervised pretraining. *ECCV,* 2018, 1
- **ANTOINE MIECH ; JEAN-BAPTISTE ALAYRAC ; LUCAS SMAIRA ; IVAN LAPTEV ; JOSEF SIVIC ; ANDREW ZISSERMAN.** End-to-end learning of visual representations from uncurated instructional videos. *CVPR,* 2020, 2
- **ARSHA NAGRANI ; SHAN YANG ; ANURAG AMAB ; AREN JANSEN ; CORDELIA SCHMID ; CHEN SUN.** Attention bottlenecks for multimodal fusion. *NeurIPS,* 2021, vol. 2 (4), 5, , 6, , 7, , 8
- **AARON VAN DEN OORD ; YAZHE LI ; ORIOL VINYALS.** Representation learning with contrastive predictive coding. *arXiv preprint arXiv:1807.03748,* 2018, 2

- **ANDREW OWENS ; ALEXEI A EFROS.** Audio-visual scene analysis with self-supervised multisensory features. *ECCV,* 2018, 2
- **DEEPAK PATHAK ; PHILIPP KRAHENBUHL ; JEFF DONAHUE ; TREVOR DARRELL ; ALEXEI A EFROS.** Context encoders: Feature learning by inpainting. *CVPR,* 2016, 2
- **MANDELA PATRICK ; YUKI M ASANO ; POLINA KUZNETSOVA ; RUTH FONG ; JOÑO F HENRIQUES ; GEOFFREY 2WEIG ; ANDREA VEDALDI.** On compositions of transformations in contrastive self-supervised learning. *ICCV,* 2021, 2
- **MANDELA PATRICK ; DYLAN CAMPBELL ; YUKI ASANO ; ISHAN MISRA ; FLORIAN METZE ; CHRISTOPH FEICHTENHOFER ; ANDREA VEDALDI ; JOÃO F HENRIQUES.** Keeping your eye on the ball: Trajectory attention in video transformers. *NeurIPS,* 2021, 8
- **ALEC RADFORD ; JONG WOOK KIM ; CHRIS HALLACY ; ADITYA RAMESH ; GABRIEL GOH ; SANDHINI AGARWAL ; GIRISH SASTRY ; AMANDA ASKELL ; PAMELA MISHKIN ; JACK CLARK et al.** Learning transferable visual models from natural language supervision. *ICML,* 2021, 1
- **MERCY RAMAZANOVA ; VICTOR ESCORCIA ; FABIAN CABA HEILBRON ; CHEN ZHAO ; BERNARD GHANEM.** OWL (observe, watch, listen): Localizing actions in egocentric video via audiovisual temporal context. *BMVC,* 2022, 2
- **ADITYA RAMESH ; MIKHAIL PAVLOV ; GABRIEL GOH ; SCOTT GRAY ; CHELSEA VOSS ; ALEE RADFORD ; MARK CHEN ; ILYA SUTSKCVCR.** Zero-shot text-to-image generation. *ICML,* 2021, 2
- **LADAN SHAMS ; ROBYN KIM.** Crossmodal. influences on visual perception. *Physics of life reviews,* 2010, vol. 7 (3), 269-284
- **KAREN SIMONYAN ; ANDREW ZISSERMAN.** Two-stream convolutional networks for action recognition in videos. *NeurIPS,* 2014, 3
- **AMANPREET SINGH ; RONGHANG FLU ; VEDANUJ GOSWAMI ; GUILLAUME COUAIRON ; WOJCIECH GALUBA ; MARCUS ROHRBACH ; DOUWE KICLA.** Flava: A foundational language and vision alignment model. *CVPR,* 2022, 1
- **LINDA SMITH ; MICHAEL GASSER.** The development of embodied cognition: Six lessons from babies. *Artificial life,* 2005, vol. 11 (1-2), 13-29
- **SHADEN SMITH ; MOSTOFA PARWARY ; BRANDON NORICK ; PATRICK LEGRESLEY ; SAMYAM RAJBHANDARI ; JARED CASPER ; ZHUN LIU ; SHRIMAI PRABHUMOYE ; GEORGE ZERVEAS ; VIJAY KORTHIKANTI et al.** Using DeepSpeed and Megatron to train Megatron-Turing NLG 530B, a large-scale generative language model. *arXiv preprint arXiv:2201.11990,* 2022, 1
- **ALEXANDROS STERGIOU ; DIMA DAMEN.** Play it back: Iterative attention for audio recognition. *arXiv preprint a.rXiv:2210.11328,* 2022, vol. 7, 8
- **CHEN SUN ; ABHINAV SHRIVASTAVA ; SAURABH SINGH ; ABHINAV GUPTA.** Revisiting unreasonable effectiveness of data in deep learning era. *ICCV,* 2017, vol. 1, 3
- **CHRISTIAN SZEGEDY ; VINCENT VANHOUCKE ; SERGEY IOFFE ; JON SHLENS ; ZBIGNIEW WOJNA.** Rethinking the inception architecture for computer vision. *CVPR,* 2016, 7
- **ZHAN TONG ; YIBING SONG ; JUE WANG ; LIMIN WANG.** VideoMAE: Masked autoencoders are data-efficient learners for self-supervised video pre-training. *arXiv preprint arXiv:2203.12602,* 2022, vol. 1 (2), , 3, , 5, , 7
- **ASHISH VASWANI ; NOAM SHAZEER ; NIKI PARMAR ; JAKOB USZKOREIT ; LLION JONES ; AIDAN N GOMEZ ; LUKASZ KAISER ; ILLIA POLOSUKHIN.** Attention is all you need. *NeurIPS,* 2017, 2
- **PASCAL VINCENT ; HUGO LAROCHELLE ; YOSHUA BENGIO ; PIERRE-ANTOINE MANZA-GOL.** Extracting and composing robust features with denoising autoencoders. *ICML,* 2008, 2
- **LUYU WANG ; PAULINE LUC ; ADRIA RECASENS ; JEAN-BAPTISTE ALAYRAC ; AARON VAN DEN OORD.** Multimodal self-supervised learning of general audio representations. *arXiv preprint arXiv:2104.12807,* 2021, 2
- **RUI WANG ; DONGDONG CHEN ; ZUXUAN WU ; YINPENG CHEN ; XIYANG DAI ; MENGCHEN LIU ; YU-GANG JIANG ; LUOWEI ZHOU ; LU YUAN.** Bevt: Bert pretraining of video transformers. *CVPR,* 2022, 2
- **WEIYAO WANG ; DU TRAN ; MATT FEISZLI.** What makes training multi-modal classification networks hard?. *CVPR,* 2020, vol. 4, 8
- **CHEN WEI ; HAOQI FAN ; SAINING XIE ; CHAO-YUAN WU ; ALAN YUILLE ; CHRISTOPH FEICHTENHOFER.** Masked feature prediction for self-supervised visual pre-training. *CVPR,* 2022, vol. 1 (2), 4
- **PHILIPPE WEINZAEPFEL ; VINCENT LEROY ; THOMAS LUCAS ; ROMAIN BRÉGIER ; YOHANN CABON ; VAIBHAV ARORA ; LEONID ANTSFELD ; BORIS CHIDLOVSKII ; GABRIELA CSURKA ; JÉRÔME REVAUD.** CroCo: Self-supervised pre-training for 3d vision tasks by cross-view completion. *NeurIPS,* 2022, 2
- **SHEN YAN ; XUEHAN XIONG ; ANURAG ARNAB ; ZHICHAO LU ; MI ZHANG ; CHEN SUN ; CORDELIA SCHMID.** Multiview transformers for video recognition. *CVPR,* 2022, vol. 5, 8

- **LU YUAN ; DONGDONG CHEN ; YI-LING CHEN ; NOEL CODELLA ; XIYANG DAI ; JIANFENG GAO ; HOUDONG HU ; XUEDONG HUANG ; BOX-IN LI ; CHUNYUAN LI et al.** Florence: A new foundation model for computer vision. *arXiv preprint arXiv:2111.11432*, 2021, 1
- **ROWAN ZELLERS ; XIMING LU ; JACK HESSEL ; YOUNGJAE YU ; JAE SUNG PARK ; JIZE CAO ; ALI FARHADI ; YEJIN CHOI.** MERLOT: Multimodal neural script knowledge models. *NeurIPS,* 2021, 2

- **HONGYI ZHANG ; MOUSTAPHA CISSE ; YANN N. DAUPHIN ; DAVID LOPEZ-PAZ.** mixup: Beyond empirical risk minimization. *ICIR,* 2018, 7
- **RICHARD ZHANG ; PHILLIP ISOLA ; ALEXEI A. EFROS.** Colorful image colorization. *ECCV,* 2016, 2